# FASCICULE DE BREVET EUROPEEN

(11) **EP 3 185 169 B1**
(45) Date de publication et mention de la délivrance du brevet: **28.08.2024**
(21) Numéro de dépôt: 15290332.4
(22) Date de dépôt: 24.12.2015
(51) Int. Cl.: G06K 7/10, H01Q 1/22, H01Q 7/00, H01Q 5/378

(54) **LECTEUR DE BILLETTIQUE, ÉQUIPEMENT ET INSTALLATION DE BILLETTIQUE ASSOCIÉS**
LESEGERÄT FÜR FAHRSCHEINAUTOMATEN, ENTSPRECHENDE AUSSTATTUNG UND ANLAGE FÜR FAHRSCHEINAUTOMATEN
COMPUTER-TICKETING READER, ASSOCIATED COMPUTER-TICKETING EQUIPMENT AND SYSTEM

(43) Date de publication de la demande: 28.06.2017
(73) Titulaire: Revenue Collection Systems France SAS, 91220 Plessis-Pâté (FR)
(72) Inventeur: Weber, Jean-Louis, 91229 Bretigny-SUR-Orge (FR)
(74) Mandataire: Lavoix

(56) Documents cités:
- EP-A1- 2 890 021
- WO-A1-2013/164556
- US-A1- 2004 100 413

## Description

La présente invention concerne un lecteur de billettique. L'invention se rapporte également à un équipement de billettique et à une installation de billettique.

Dans le domaine des transports, il est utilisé des lecteurs de billettique.

Les lecteurs de billettique sont intégrés à des équipements de billettique. Les équipements de billettique sont installés, par exemple, dans des gares ou dans des véhicules de transport de personnes, tels des bus. Ces équipements de billettique permettent, notamment, aux usagers de réseaux de transports publics munis de titres de transport d'accéder auxdits réseaux.

Du fait de la multiplication des cartes pour différents usages, il est souhaitable que de tels lecteurs de billettique puissent fonctionner avec d'autres types de cartes.

Les lecteurs de billettique connus permettent d'interagir avec des cartes de transport comme des cartes de transport de type « Navigo ». Dans un tel cas, les interactions entre les lecteurs de billettique et les cartes sans contact sont mises en oeuvre au moyen d'antennes selon le principe du couplage magnétique.

Une telle antenne est formée d'une boucle et d'une ferrite. La ferrite est adaptée pour canaliser les lignes de champ magnétique, ce qui est nécessaire compte-tenu des effets d'un environnement métallique sur les performances du lecteur.

Des antennes sont également connues des documents US 2004/0100413 A1 et WO 2013/164556 A1.

Le document US 2004/0100413 A1 décrit une antenne pouvant comprendre une pluralité de boucles, dont une ou plusieurs boucles alimentées et une ou plusieurs boucles passives. Les boucles passives reçoivent de l'énergie à partir d'un couplage mutuel avec les boucles alimentées provoquant la circulation du courant dans les boucles passives, ce qui contribue au profil du champ magnétique. Le document WO 2013/164556 A1 décrit une antenne destinée à être utilisée pour interroger des étiquettes RFID à proximité immédiate de celle-ci. L'antenne comprend un élément actif configuré pour résonner à ou près d'une fréquence requise pour lire une étiquette RFID, l'élément actif comprenant un point d'alimentation et une pluralité d'éléments passifs, chaque élément passif étant configuré pour résonner à ou autour d'une fréquence correspondant à ladite fréquence. Les éléments passifs sont agencés autour de l'élément actif de sorte que les éléments passifs se couplent électromagnétiquement à l'élément actif.

Toutefois, de tels lecteurs de billettique ne peuvent fonctionner avec un autre type de carte, notamment une carte bancaire tout en respectant les normes imposées actuellement.

Il existe donc un besoin pour un lecteur de billettique pouvant fonctionner dans un équipement de billettique en interaction avec des cartes bancaires.

A cet effet, il est proposé un lecteur de billettique selon la revendication 1.

Il est à noter qu'un tel lecteur de billettique présente un volume de communication réduit.

Par l'expression « volume de communication », il est entendu le volume dans lequel doivent se situer les cartes sans contact pour pouvoir interagir correctement avec le lecteur de billettique.

En particulier, la simple adaptation des dimensions de l'antenne d'un lecteur de billettique selon l'état de la technique conduit à un volume de communication incompatible avec les normes imposées actuellement.

Suivant des modes de réalisation particuliers, le lecteur de billettique comprend une ou plusieurs des caractéristiques des revendications 2 à 9.

Il est également proposé un équipement de billettique selon la revendication 10.

Il est aussi proposé une installation de billettique selon la revendication 11.

D'autres caractéristiques et avantages de l'invention apparaîtront à la lecture de la description qui suit de modes de réalisation de l'invention, donnée à titre d'exemple uniquement et en référence aux dessins qui sont :
- figure 1, une représentation schématique d'un exemple d'installation de billettique ;
- figure 2, une représentation schématique d'un exemple de média sans contact de l'installation de billettique de la figure 1 ;
- figure 3, une représentation schématique d'un exemple d'équipement de billettique ;
- figure 4, une vue schématique d'un exemple d'antenne d'un lecteur de billettique;
- figure 5, une représentation d'un volume de communication, et
- figure 6, une vue schématique d'un autre exemple d'antenne d'un lecteur de billettique.

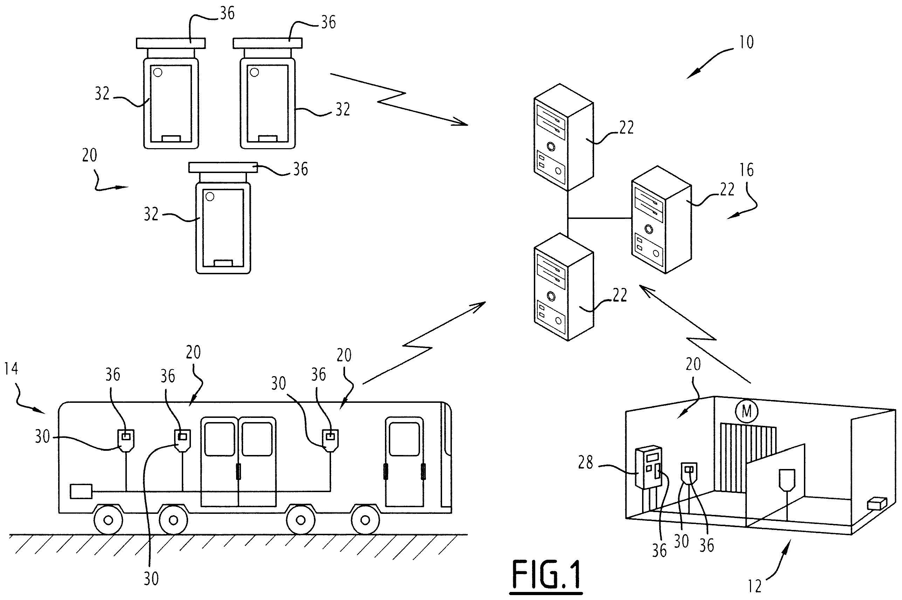

Une installation 10 de billettique est représentée sur la figure 1.

L'installation 10 est destinée à assurer l'accès, le contrôle et le suivi d'usagers empruntant un réseau de transport public.

L'installation 10 est déployée au sein du réseau de transport public.

Comme visible sur la figure 1, l'installation 10 est notamment déployée au sein de stations de métro 12 et de véhicules de transport de personnes 14, par exemple des bus.

L'installation 10 comprend un système informatique central 16, au moins un média sans contact 18 et au moins un équipement 20 de billettique.

Le système informatique central 16 est adapté pour traiter des informations de voyage échangées avec les équipements 20.

Les informations de voyage comprennent, par exemple, les numéros de séries de médias sans contact 18, des informations d'entrée ou de sortie de chacun des médias sans contact 18 ou encore des informations sur les contrats de transport associés à chacun des médias sans contact 18.

Le système informatique central 16 est alors adapté, par exemple, pour reconstituer les voyages effectués par chaque usager en vue de renseigner des comptes d'usagers respectifs.

Comme visible sur la figure 1, le système informatique central 16 est hébergé sur un ensemble de serveurs 22 distants.

En outre, le système informatique central 16 est connecté par des liaisons, filaires ou non filaires, aux équipements 20.

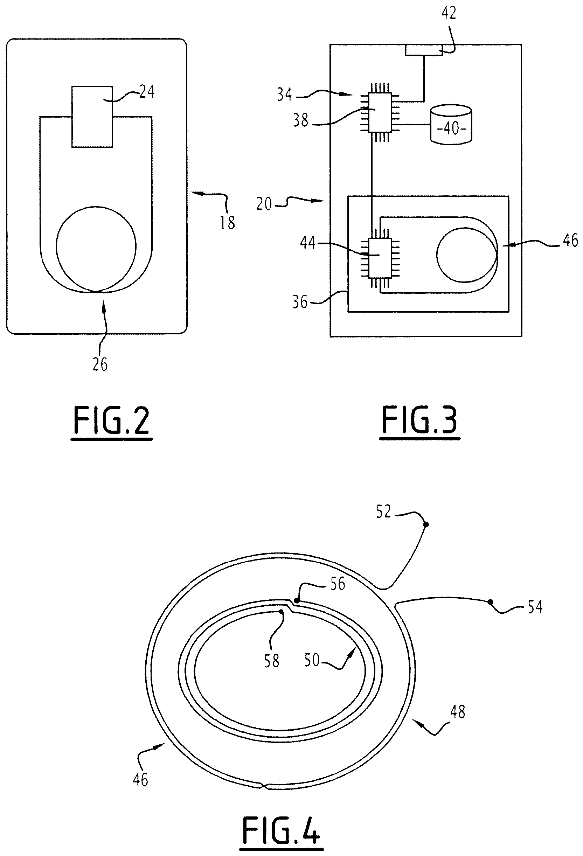

Un média sans contact 18 est représenté sur la figure 2.

Le média sans contact 18 est adapté pour porter, notamment, au moins un titre de transport d'au moins un usager du réseau de transport public. En général, le média sans contact 18 est nominatif, c'est-à-dire que le média sans contact 18 est attribué à un seul usager.

Le média sans contact 18 est, par exemple, un périphérique du type communication en champ proche, de l'anglais « near field communication » (NFC).

Le média sans contact 18 est, par exemple, une carte, un jeton ou encore une clé USB.

Dans l'exemple de la figure 2, le média sans contact 18 est une carte bancaire.

En particulier, le média sans contact 18 est une carte bancaire du type « Eurocard-Mastercard-Visa » (EMV), ce qui signifie que la carte bancaire est conforme au standard EMV. Le standard EMV, initié par le consortium EMVCo, est un standard international pour les cartes de débit ou de crédit à puce.

Le média sans contact 18 est adapté pour interagir avec les équipements 20 en utilisant la communication NFC.

La communication NFC est une technologie de communication sans fil à courte portée et à haute fréquence, permettant l'échange d'informations entre des périphériques jusqu'à une distance d'environ 10 centimètres. Cette technologie est une extension de la norme ISO/CEI 14443 standardisant les cartes de proximité utilisant la radio-identification, également connue sous l'acronyme RFID.

Le média sans contact 18 comprend une puce électronique 24 et un circuit d'émission-réception 26.

La puce électronique 24 est adaptée pour gérer des données et pour contrôler le circuit d'émission-réception 26 et comprend un microprocesseur et une mémoire, non représentés sur la figure 2. En outre, la puce électronique 24 est adaptée pour modifier la charge du circuit d'émission-réception 26.

Le circuit d'émission-réception 26 prend la forme d'une antenne et est adapté pour recevoir des ondes électromagnétiques.

Les équipements 20 sont adaptés pour permettre aux usagers munis de média sans contact 18 d'effectuer un ensemble d'opérations. Les opérations sont, à titre illustratif, accéder au réseau de transport public, recharger un compte d'usager ou encore consulter le solde dudit compte.

Comme visible sur la figure 1, les équipements 20 sont, par exemple, des machines de vente 28, des valideurs 30 et des terminaux de contrôle 32.

Les machines de vente 28 sont, par exemple, installées dans les véhicules de transport de personnes 14 et dans les stations de métro 12.

Les terminaux de contrôle 32 sont, quant à eux, utilisés par des agents de contrôle circulant au sein du réseau de transport public pour traquer les fraudeurs.

A titre d'illustration, les terminaux de contrôle 32 sont adaptés, par exemple, pour contrôler qu'un usager utilisant ledit réseau de transport public a bien préalablement validé son titre de transport.

En outre, les équipements 20 sont également des portillons de contrôle d'accès ou des lecteurs de guichets, non représentés sur les figures.

Les portillons de contrôle d'accès sont adaptés pour n'autoriser l'accès au réseau de transport public qu'aux usagers disposant d'un titre de transport à jour qui a été validé.

Les lecteurs de guichets sont, par exemple, utilisés par des personnels de guichet pour modifier les contrats, ou les crédits de transport, portés par les cartes et éventuellement pour renseigner les usagers sur l'état de leur compte d'usager.

Un des équipements 20 de l'installation 10 de la figure 1 est représenté sur la figure 3.

Comme visible sur la figure 3, chaque équipement 20 comprend un système de gestion 34 et un lecteur 36.

Le système de gestion 34 est adapté pour mettre en oeuvre des traitements à partir d'informations de voyage contenues dans le système informatique central 16 et de données résultant d'interactions avec les médias sans contact 18.

Le système de gestion 34 comprend un processeur de gestion 38, une mémoire 40 et une liaison de communication 42.

Le processeur de gestion 38 est adapté pour gérer les échanges de données entre le lecteur 36 et le système informatique central 16.

Le processeur de gestion 38 est connecté au lecteur 36, à la mémoire 40 et à la liaison de communication 42.

La mémoire 40 est adaptée pour mémoriser un ensemble de données et se comporte, par exemple, comme une mémoire tampon.

La liaison de communication 42 est notamment adaptée pour assurer l'échange de données entre l'équipement 20 et le système informatique central 16.

La liaison de communication 42 fait, par exemple, partie d'un réseau filaire de type Ethernet. Alternativement, la liaison de communication 42 fait partie d'un réseau de type Wi-Fi ou UMTS, de l'anglais « Universal Mobile Télécommunications System ».

Indépendamment du type d'équipement 20 considéré, chaque équipement 20 comprend un lecteur 36 de billettique.

Comme visible sur la figure 1, les lecteurs 36 sont installés sur chacun des équipements 20 et, par conséquent, peuvent présenter des formes différentes.

Dans la suite, le lecteur 36 de la figure 3 est décrit indépendamment de l'équipement 20 sur lequel l'équipement 20 est installé.

Le lecteur 36 est adapté pour interagir à distance avec un média sans contact 18. Les interactions sont mises en oeuvre en utilisant la communication NFC.

En particulier, le lecteur 36 est adapté pour interagir avec le média sans contact 18 de la figure 2, c'est-à-dire avec une carte bancaire.

Le lecteur 36 comprend un contrôleur 44 et une antenne 46.

Le contrôleur 44 est adapté pour alimenter en courant un organe. En particulier, le contrôleur 44 est adapté pour alimenter une partie de l'antenne 46 par un signal électrique, ledit signal électrique étant fonction de données à transmettre. En outre, le contrôleur 44 est adapté pour interpréter un signal électrique reçu de l'antenne 46 et pour, à partir dudit signal électrique reçu, en déduire des données.

Le contrôleur 44 est connecté d'une part à l'antenne 46 et d'autre part au processeur de gestion 38.

L'antenne 46 est adaptée pour émettre et recevoir des ondes électromagnétiques à une fréquence de fonctionnement, notée f.

L'antenne 46 définit un mode émission et un mode réception.

Dans le mode émission, l'antenne 46 émet des ondes électromagnétiques sous l'influence d'un signal généré par le contrôleur 44. Les caractéristiques des ondes électromagnétiques émises sont fonction de la fréquence dudit signal et de caractéristiques de l'antenne 46.

Dans le mode réception, l'antenne 46 reçoit des ondes électromagnétiques émises par le média sans contact 18. Sous l'effet des ondes électromagnétiques reçues, un signal électrique induit se forme au niveau de l'antenne 46 et alimente alors le contrôleur 44 pour déduction de données.

Comme visible sur la figure 4, l'antenne 46 comprend une première boucle 48 et une deuxième boucle 50.

Les première et deuxième boucles 48, 50 sont réalisées chacune, par exemple, en cuivre.

La première boucle 48 se présente, par exemple, sous la forme d'une ellipse.

Alternativement, la première boucle 48 se présente sous la forme d'un cercle.

Alternativement, la première boucle 48 se présente sous la forme d'un carré ou d'un rectangle aux angles arrondis.

Alternativement, la première boucle 48 se présente sous une forme quelconque.

La première boucle 48 comprend une ou plusieurs spires.

Par exemple, la première boucle 48 comprend deux spires.

La première boucle 48 comprend deux extrémités 52 et 54.

La première boucle 48 est reliée au contrôleur 44 par l'intermédiaire des extrémités 52 et 54.

De fait, la première boucle 48 est un composant dit actif.

Par l'expression « composant actif », il est entendu un composant alimenté électriquement par le contrôleur 44.

En outre, la première boucle 48 est accordée sur une première fréquence f1.

Par l'expression « la boucle accordée sur une fréquence », il est entendu que la boucle considérée présente des caractéristiques physiques dimensionnées de sorte que, sous l'influence d'un signal présentant des caractéristiques prédéterminées, la boucle interagit avec des ondes électromagnétiques présentant ladite fréquence. Par interaction, il est entendu, soit une émission, soit une réception.

Par exemple, les caractéristiques physiques sont le diamètre de la boucle ou le nombre de spires.

La première fréquence f1 est égale à la fréquence de fonctionnement f.

A titre d'illustration, la première fréquence f1 est comprise entre 10 MHz et 15 MHz, par exemple égale à 13,56 MHz.

Dans l'exemple de la figure 4, la première boucle 48 s'étend dans un premier plan. Le premier plan est confondu avec le plan de la feuille.

Par ailleurs, la première boucle 48 présente un diamètre.

Par l'expression « diamètre » d'une boucle, il est entendu, la distance maximale entre deux points de la boucle.

De manière générale, la première boucle 48 présente une périphérie et la distance maximale est mesurée en prenant deux points de la périphérie.

A titre d'illustration, lorsque la boucle se présente sous la forme d'un cercle, le « diamètre » est le diamètre du cercle au sens mathématique.

Le diamètre de la première boucle 48 est compris entre 30 millimètres et 300 millimètres, par exemple égal à 100 millimètres.

La deuxième boucle 50 se présente également, par exemple, sous la forme d'une ellipse. Alternativement, la deuxième boucle 50 se présente sous la forme d'un cercle. Alternativement, la deuxième boucle 50 se présente sous la forme d'un carré ou d'un rectangle aux angles arrondis. Alternativement, la deuxième boucle 50 se présente sous une forme quelconque.

La deuxième boucle 50 comprend une ou plusieurs spires.

Par exemple, la deuxième boucle 50 comprend trois spires.

La deuxième boucle 50 comprend deux extrémités 56 et 58.

A la différence de la première boucle 48, la deuxième boucle 50 est passive, c'est-à-dire que la deuxième boucle 50 n'est pas alimentée électriquement par le contrôleur 44.

Les extrémités 56 et 58 de la deuxième boucle 50 sont, par exemple, reliées à un condensateur.

Le condensateur présente une capacité comprise entre 10 pF et 1 nF, par exemple de l'ordre de 56 pF.

La deuxième boucle 50 est accordée sur une deuxième fréquence f2.

La deuxième fréquence f2 est différente de la première fréquence f1.

A titre d'illustration, la deuxième fréquence f2 est comprise entre 14 MHz et 20 MHz, par exemple égale à 18,80 MHz.

En particulier, dans l'exemple de la figure 4, la deuxième boucle 48 s'étend dans un deuxième plan. Dans l'exemple de la figure 4, le deuxième plan est confondu avec le plan de la feuille et est, par conséquent, confondu avec le premier plan.

Alternativement, le premier plan et le deuxième plan sont parallèles mais non confondus.

En variante, le premier plan et le deuxième plan sont inclinés, définissant ainsi un angle α entre le premier plan et le deuxième plan.

L'angle α est défini comme étant l'angle formé une première droite et une deuxième droite, la première droite et la deuxième droite étant respectivement perpendiculaires au premier plan et au deuxième plan.

L'angle α est, par exemple, inférieur ou égale à 45°. De préférence, l'angle α est inférieur à 5°.

Comme visible sur la figure 4, la première boucle 48 et la deuxième boucle 50 sont concentriques. Dans le cadre de la demande, il est entendu par « concentrique » le sens mathématique, à savoir que les première et deuxième boucles 48 et 50 partagent le même centre, le centre d'une boucle étant défini comme le centre de gravité de la boucle considérée.

D'une façon générale, la première boucle 48 définit un premier espace E1.

Le premier espace E1 est défini comme étant l'espace intérieur d'une première sphère.

La première sphère est circonscrite à la première boucle 48.

Une sphère circonscrite à une boucle est définie comme étant la sphère présentant le plus petit rayon tel que l'espace intérieur de la sphère contienne tous les points de la boucle.

De façon analogue, la deuxième boucle 50 définit un deuxième espace E2.

Le deuxième espace E2 est défini comme l'espace intérieur d'une deuxième sphère, la deuxième sphère étant circonscrite à la deuxième boucle 50.

L'intersection entre le premier espace E1 et le deuxième espace E2 définit un espace commun. L'espace commun est alors défini comme l'espace formé des points appartenant à la fois au premier espace E1 et au deuxième espace E2.

Avantageusement, l'espace commun est différent de l'ensemble vide et présente un volume commun.

De préférence, le volume commun est au moins égal à 10% du volume du deuxième espace E2.

Dans l'exemple de la figure 4, le deuxième espace E2 est inclus dans le premier espace E1. Dans un tel cas, l'espace commun est de fait le deuxième espace E2.

En outre, dans l'exemple de la figure 4, le centre de la première boucle 48 et le centre de la deuxième boucle 50 sont confondus et situés dans l'espace commun.

Comme visible sur la figure 4, la première boucle 48 est située en périphérie de la deuxième boucle 50.

Par ailleurs, la deuxième boucle 50 présente un diamètre.

Le diamètre de la deuxième boucle est, par exemple, compris entre 30 millimètres et 300 millimètres.

En outre, il est défini le rapport entre le diamètre de la deuxième boucle 50 et le diamètre de la première boucle 48. Un tel rapport est appelé R dans la suite.

Pour ce rapport R, le diamètre de la deuxième boucle 50 est le numérateur alors que le diamètre de la première boucle 48 est le dénominateur.

Le rapport R est, par exemple, supérieur ou égal à 0,5.

En complément ou en variante, le rapport R est inférieur ou égal à 1.

Par ailleurs, des caractéristiques de l'antenne 46 fixent le volume de communication du lecteur 36.

De fait, les caractéristiques de l'antenne 46 sont fixées de sorte à ce que l'antenne 46 puisse d'une part être intégrée aux équipements 20 et satisfasse d'autre part aux exigences de la spécification bancaire.

Par l'expression « exigences de la spécification bancaire », il est fait référence aux spécifications relatives aux cartes EMV, désignées par l'expression anglaise « EMV Contactless Spécifications for Payment Systems ».

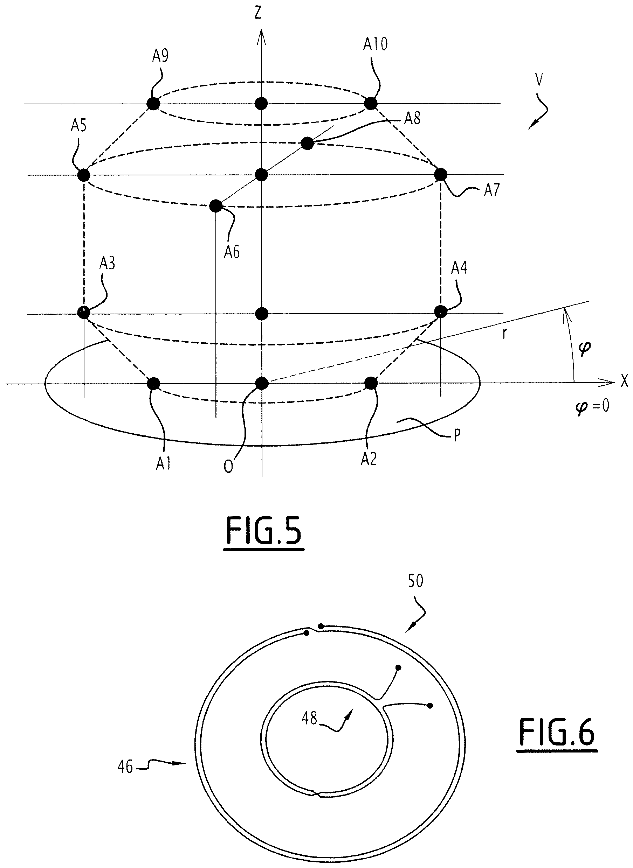

En particulier, les spécifications EMV définissent un volume de communication V, représenté sur la figure 5. Il s'agit du volume de communication V défini par le « Book D » des spécifications EMV et intitulé « Contactless Communication Protocol ».

Le volume de communication V est défini à partir d'un plan P et d'un ensemble de dix points notés A1 à A10.

Le plan P est confondu avec une surface d'un équipement 20 et correspond, par exemple, à l'endroit où l'usager doit présenter son média sans contact 18.

Dans certaines configurations, le plan P est parallèle à au moins un plan parmi le premier plan et le deuxième plan dans lesquels s'étendent respectivement la première boucle 48 et la deuxième boucle 50.

Chacun des points A1 à A10 est repéré, sur la figure 5, dans un repère utilisant des coordonnées cylindriques, c'est-à-dire des coordonnées polaires dans le plan P et une altitude.

Les coordonnées polaires dans le plan P correspondent à une distance r et à un angle ϕ.

La distance r est la distance euclidienne entre le projeté orthogonal dudit point sur le plan P et une origine O. L'origine O est contenue dans le plan P et repérée par des coordonnées d'origine qui sont (0, 0, 0).

L'angle ϕ d'un point correspond à l'angle formé par une direction X, contenue dans le plan P, et par la droite passant par l'origine O et le projeté orthogonal dudit point sur le plan P.

L'altitude est donnée selon une direction verticale Z. La direction verticale Z est perpendiculaire à la direction X.

De fait, chacun des points A1 à A10 est représenté sous la forme (r, ϕ, z), r étant exprimé en centimètres, ϕ en radians et z en centimètres.

Les coordonnées du premier point A1 sont (1,5, π, 0) ; les coordonnées du deuxième point A2 sont (1,5, 0, 0) ; les coordonnées du troisième point A3 sont (2,5, π, 1) ; les coordonnées du quatrième point A4 sont (2,5, 0, 1) ; les coordonnées du cinquième point A5 sont (2,5, π, 3) ; les coordonnées du sixième point A6 sont (2,5, 3π/2, 3) ; les coordonnées du septième point A7 sont (2,5, 0, 3) ; les coordonnées du huitième point A8 sont (2,5, π/2, 3) ; les coordonnées du neuvième point A9 sont (1,5, π, 4), et les coordonnées du dixième point A10 sont (1,5, 0, 4).

Le volume de communication V est alors délimité par le plan P et une surface passant par chacun des points A1 à A10.

Plus précisément, la surface correspond à la surface d'un cylindre à base circulaire délimité par deux cônes tronqués le long de la direction verticale Z.

Dans l'exemple présenté, les deux cônes tronqués sont identiques et sont positionnés tête-bêche.

Comme visible sur la figure 5, le cylindre à base circulaire passe par les points A3 à A8, alors que le premier cône tronqué passe par les points A1 et A2 et que le deuxième cône tronqué passe par les points A9 et A10.

De plus, la surface présente une symétrie de révolution autour de la direction verticale Z, une hauteur prise selon la direction verticale Z d'environ 4 centimètres et un diamètre pris dans le plan P d'environ 3 centimètres.

Le fonctionnement du lecteur de billettique 36 est à présent décrit dans une situation typique d'utilisation.

Par exemple, un usager présente son titre de transport, porté par sa carte bancaire du type EMV, au niveau du lecteur 36 d'un équipement 20 qui est un portillon de contrôle d'accès.

L'antenne 46 du lecteur 36 émet continûment des ondes électromagnétiques à la première fréquence f1 du fait de l'alimentation de la première boucle 48 par le contrôleur 44.

Lorsque l'usager positionne sa carte bancaire dans le volume de communication V de l'équipement, les ondes électromagnétiques émises par l'antenne 46 génèrent un signal électrique induit dans le circuit d'émission-réception 26 de la carte bancaire. De fait, le circuit d'émission-réception 26 se retrouve alors alimenté électriquement.

Le lecteur 36 et la carte bancaire peuvent alors interagir.

Lorsque l'antenne 46 fonctionne en mode émission, c'est-à-dire lorsque des données sont transmises à la carte bancaire, le contrôleur 44 met en oeuvre une modulation d'amplitude des ondes électromagnétiques émises.

A titre d'illustration, le contrôleur 44 met en oeuvre une modulation d'amplitude de la porteuse présentant la première fréquence f1 avec un taux de modulation compris entre 10% et 100%.

Pour répondre au lecteur 36, la puce électronique 24 fait varier la charge résistive du circuit d'émission-réception 26. De fait, le signal circulant dans le circuit d'émission-réception 26 varie et la consommation d'énergie se retrouve modifiée. Ainsi, par couplage électromagnétique, le signal circulant dans la première boucle 48 est modifié, ce qui permet au contrôleur 44 d'en déduire des données transmises.

Le lecteur 36 permet de concentrer les lignes de champ électromagnétique émises par l'antenne 46.

Ainsi, à la différence des antennes de l'état de la technique, l'antenne 46 est dépourvue de ferrite et la présence d'une deuxième boucle 50 passive permet de facilement recentrer les lignes de champ électromagnétique autour de la direction d'émission.

La direction d'émission est définie comme étant la direction passant par le centre de la première boucle 48 et qui est perpendiculaire au premier plan dans lequel s'étend la première boucle 48.

Ainsi, le fait de remplacer la ferrite par une boucle passive permet de disposer de lecteur 36 satisfaisants en termes de coûts, de performances et de compacité. Par compacité, on entend en particulier l'épaisseur du lecteur 36.

En outre, la présente solution offre l'avantage d'être compatible avec les équipements 20 de billettique existants.

Par ailleurs, la présence d'une deuxième boucle 50 passive permet également de disposer d'un lecteur 36 robuste aux influences des masses métalliques extérieures, telles que la structure métallique entrant dans la constitution des équipements 20.

De plus, les mesures d'impédances effectuées d'une part sur une antenne de l'état de la technique et d'autre sur l'antenne 46, les deux antennes présentant la même fréquence de fonctionnement de 13,56 MHz, montrent que les impédances respectives sont les mêmes. De fait, la puissance émise par le lecteur 36 est la même dans les deux cas, sans qu'il y ait besoin de ferrite ou d'adaptations spécifiques à la masse environnante au niveau de la conception de ladite antenne 46.

Un deuxième mode de réalisation de l'antenne 46 est représenté sur la figure 6.

La présente antenne 46 diffère de l'antenne du premier mode de réalisation de la figure 4 par le seul fait que le premier espace E1 est inclus dans le deuxième espace E2. Dans un tel cas, l'espace commun est de fait le premier espace E1.

Des remarques analogues sur les premier et deuxième espaces E1 et E2 formulées précédemment s'appliquent également ici.

Dans l'exemple de la figure 6, la deuxième boucle 50 est alors située en périphérie de la première boucle 48.

Le lecteur 36 comportant l'antenne 46 de la figure 6 fonctionne de manière similaire au premier mode de réalisation et présente les mêmes avantages.

D'autres variantes de réalisation de l'antenne 46 sont possibles.

Par exemple, la première boucle 48 et/ou la deuxième boucle 50, à la différence des modes de réalisation des figures 4 et 6, ne s'étend pas dans des plans. De fait, la surface définissant la première boucle 48 et/ou la deuxième boucle 50 n'est pas plane.

Dans d'autres variantes, les première et deuxième boucles 48 et 50 ne sont pas concentriques. Les centres respectifs des première et deuxième boucles 48 et 50 sont alors distincts.

Dans chacun des modes de réalisation, le lecteur de billettique 36 peut fonctionner dans un équipement de billettique en interaction avec des cartes bancaires.

D'autres modes de réalisation sont envisageables.

## Revendications

1. Lecteur (36) de billettique adapté pour interagir à distance avec un média sans contact (18), le lecteur (36) comprenant :
- une antenne (46) adaptée pour émettre et recevoir des ondes électromagnétiques à une fréquence de fonctionnement (f), et
- un contrôleur (44) adapté pour alimenter en courant un organe,
l'antenne (46) comprenant :
- une première boucle (48) accordée sur une première fréquence (f1), la première boucle (48) étant un composant actif, un composant actif étant défini comme un composant alimenté par le contrôleur (44), et
- une deuxième boucle (50) accordée sur une deuxième fréquence (f2), la deuxième boucle (50) étant un composant passif,
la première fréquence (f1) et la deuxième fréquence (f2) étant distinctes, la première fréquence (f1) étant la fréquence de fonctionnement (f) de l'antenne (46),
la première boucle (48) présentant des caractéristiques physiques dimensionnées de sorte que, sous l'influence d'un signal présentant des caractéristiques prédéterminées, la première boucle (48) interagisse avec des ondes électromagnétiques présentant ladite première fréquence (f1), la première boucle (48) s'étendant dans un premier plan, et
la deuxième boucle (50) présentant des caractéristiques physiques dimensionnées de sorte que, sous l'influence d'un signal présentant des caractéristiques prédéterminées, la deuxième boucle (50) interagisse avec des ondes électromagnétiques présentant ladite deuxième fréquence (f2),
la deuxième boucle (50) étant propre à recentrer les lignes de champ électromagnétique autour d'une direction d'émission de la première boucle (48), la direction d'émission étant définie comme étant la direction passant par un centre de la première boucle (48) et qui est perpendiculaire au premier plan dans lequel s'étend la première boucle (48), et
le media sans contact (18) étant une carte bancaire.

2. Lecteur (36) de billettique selon la revendication 1, dans lequel la première fréquence (f1) et la deuxième fréquence (f2) sont chacune comprises entre 10,0 MHz et 20,0 MHz.

3. Lecteur (36) de billettique selon la revendication 1 ou 2, dans lequel la deuxième boucle (50) est reliée à un condensateur.

4. Lecteur (36) de billettique selon l'une quelconque des revendications 1 à 3, dans lequel la première boucle (48) définit un premier espace (E1) et la deuxième boucle (50) définit un deuxième espace (E2), l'intersection entre le premier espace (E1) et le deuxième espace (E2) étant différente de l'ensemble vide.

5. Lecteur (36) de billettique selon la revendication 4, dans lequel l'intersection entre le premier espace (E1) et le deuxième espace (E2) contient le centre de la première boucle (48) et le centre de la deuxième boucle (50).

6. Lecteur (36) de billettique selon l'une quelconque des revendications 1 à 5, dans lequel la première boucle (48) et la deuxième boucle (50) sont concentriques.

7. Lecteur (36) de billettique selon l'une quelconque des revendications 1 à 6, dans lequel la première boucle (48) s'étend selon un premier plan, la deuxième boucle (50) s'étend selon un deuxième plan, l'angle (α) entre les deux plans étant inférieur ou égal à 45°.

8. Lecteur (36) de billettique selon l'une quelconque des revendications 1 à 7, dans lequel chaque boucle (48, 50) présente un diamètre, le rapport (R) entre le diamètre de la deuxième boucle (50) et le diamètre de la première boucle (48) étant supérieur ou égal à 0,5.

9. Lecteur (36) de billettique selon l'une quelconque des revendications 1 à 8, dans lequel chaque boucle (48, 50) présente un diamètre, le rapport (R) entre le diamètre de la deuxième boucle (50) et le diamètre de la première boucle (48) étant inférieur ou égal à 1.

10. Equipement (20) de billettique comprenant au moins un lecteur (36) de billettique selon l'une quelconque des revendications 1 à 9, l'équipement (20) de billettique étant choisi parmi le groupe consistant en une machine de vente (28), un portillon de contrôle d'accès, un valideur (30) et un lecteur de guichet et un terminal mobile de contrôle (32).

11. Installation (10) de billettique comprenant :
- au moins un équipement (20) de billettique selon la revendication 10 ;
- un système informatique central (16), et
- au moins un média sans contact (18).

## Patentansprüche

1. Fahrkartenleser (36), der zur Ferninteraktion mit einem kontaktlosen Medium (18) geeignet ist, wobei der Leser (36) umfasst:
- eine Antenne (46), die zum Senden und Empfangen von elektromagnetischen Wellen mit einer Betriebsfrequenz (f) geeignet ist, und
- eine Steuerung (44), die dazu geeignet ist, ein Element mit Strom zu versorgen, wobei die Antenne (46) umfasst:
- eine erste Schleife (48), die auf eine erste Frequenz (f1) abgestimmt ist, wobei die erste Schleife (48) eine aktive Komponente ist, wobei eine aktive Komponente als eine Komponente definiert ist, die von der Steuerung (44) mit Strom versorgt wird, und
- eine zweite Schleife (50), die auf eine zweite Frequenz (f2) abgestimmt ist, wobei die zweite Schleife (50) eine passive Komponente ist,
wobei die erste Frequenz (f1) und die zweite Frequenz (f2) verschieden sind, wobei die erste Frequenz (f1) die Betriebsfrequenz (f) der Antenne (46) ist,
die erste Schleife (48) physikalische Eigenschaften aufweist, die so dimensioniert sind, dass unter dem Einfluss eines Signals mit vorbestimmten Eigenschaften die erste Schleife (48) mit elektromagnetischen Wellen mit der ersten Frequenz (f1) in Wechselwirkung tritt, wobei sich die erste Schleife (48) in einer ersten Ebene erstreckt, und
wobei die zweite Schleife (50) physikalische Eigenschaften aufweist, die so dimensioniert sind, dass unter dem Einfluss eines Signals mit vorbestimmten Eigenschaften die zweite Schleife (50) mit elektromagnetischen Wellen, die die zweite Frequenz (f2) aufweisen, in Wechselwirkung tritt,
wobei die zweite Schleife (50) geeignet ist, die elektromagnetischen Feldlinien um eine Senderichtung der ersten Schleife (48) herum neu zu zentrieren, wobei die Senderichtung als die Richtung definiert ist, die durch ein Zentrum der ersten Schleife (48) verläuft und die senkrecht zu der ersten Ebene ist, in der sich die erste Schleife (48) erstreckt, und
das kontaktlose Medium (18) eine Bankkarte ist.

2. Fahrkartenleser (36) nach Anspruch 1, bei dem die erste Frequenz (f1) und die zweite Frequenz (f2) jeweils zwischen 10,0 MHz und 20,0 MHz liegen.

3. Fahrkartenleser (36) nach Anspruch 1 oder 2, bei dem die zweite Schleife (50) mit einem Kondensator verbunden ist.

4. Fahrkartenleser (36) nach einem der Ansprüche 1 bis 3, wobei die erste Schleife (48) einen ersten Raum (E1) definiert und die zweite Schleife (50) einen zweiten Raum (E2) definiert, wobei der Schnittpunkt zwischen dem ersten Raum (E1) und dem zweiten Raum (E2) von der leeren Menge verschieden ist.

5. Fahrkartenleser (36) nach Anspruch 4, wobei der Schnittpunkt zwischen dem ersten Raum (E1) und dem zweiten Raum (E2) die Mitte der ersten Schleife (48) und die Mitte der zweiten Schleife (50) enthält.

6. Fahrkartenleser (36) nach einem der Ansprüche 1 bis 5, wobei die erste Schleife (48) und die zweite Schleife (50) konzentrisch sind.

7. Fahrkartenleser (36) nach einem der Ansprüche 1 bis 6, bei dem die erste Schleife (48) sich entlang einer ersten Ebene erstreckt, die zweite Schleife (50) sich entlang einer zweiten Ebene erstreckt, wobei der Winkel (α) zwischen den beiden Ebenen kleiner oder gleich 45° ist.

8. Fahrkartenleser (36) nach einem der Ansprüche 1 bis 7, bei dem jede Schleife (48, 50) einen Durchmesser aufweist, wobei das Verhältnis (R) zwischen dem Durchmesser der zweiten Schleife (50) und dem Durchmesser der ersten Schleife (48) größer oder gleich 0,5 ist.

9. Fahrkartenleser (36) nach einem der Ansprüche 1 bis 8, bei dem jede Schleife (48, 50) einen Durchmesser aufweist, wobei das Verhältnis (R) zwischen dem Durchmesser der zweiten Schleife (50) und dem Durchmesser der ersten Schleife (48) kleiner oder gleich 1 ist.

10. Ticketing-Ausrüstung (20) mit mindestens einem Fahrkartenleser (36) nach einem der Ansprüche 1 bis 9, wobei die Ticketing-Ausrüstung (20) aus der Gruppe ausgewählt ist, die aus einem Verkaufsautomaten (28), einer Zugangskontrolltür, einem Entwerter (30) und einem Schalterleser und einem mobilen Kontrollterminal (32) besteht.

11. Tickting-Anlage (10), umfassend:
- mindestens eine Ticketing-Ausrüstung (20) gemäß Anspruch 10;
- ein zentrales Computersystem (16) und
- mindestens ein kontaktloses Medium (18).

## Claims

1. A ticketing reader (36) adapted to interact remotely with a contactless medium (18), in particular a bank card, the reader (36) comprising:
- an antenna (46) adapted to send and receive electromagnetic waves at an operating frequency (f), and
- a controller (44) adapted to supply current to a member,
the antenna (46) comprising:
- a first loop (48) tuned to a first frequency (f1), the first loop (48) being an active component, an active component being defined as a component supplied by the controller (44), and
- a second loop (50) tuned to a second frequency (f2), the second loop (50) being a passive component,
the first frequency (f1) and the second frequency (f2) being different, the first frequency (f1) being the operating frequency (f) of the antenna (46).
the first loop (48) having physical characteristics dimensioned such that, under the influence of a signal having predetermined characteristics, the first loop (48) interacts with electromagnetic waves having said first frequency (f1), the first loop (48) extending in a first plane, and
the second loop (50) having physical characteristics dimensioned such that, under the influence of a signal having predetermined characteristics, the second loop (50) interacts with electromagnetic waves having said second frequency (f2),
the second loop (50) being adapted to recenter the electromagnetic field lines around an emission direction of the first loop (48), the emission direction being defined as the directing passing by a center of the first loop (48) and which is perpendicular to the first plane in which the first loop (48) extends, and
the contactless medium (18) is a bank card.

2. The ticketing reader (36) according to claim 1, wherein the first frequency (f1) and the second frequency (f2) are each comprised between 10.0 MHz and 20.0 MHz.

3. The ticketing reader (36) according to claim 1 or 2, wherein the second loop (50) is connected to a capacitor.

4. The ticketing reader (36) according to any one of the claims 1 to 3, wherein the first loop (48) defines a first space (E1) and the second loop (50) defines a second space (E2), the intersection between the first space (E1) and the second space (E2) being different from the empty set.

5. The ticketing reader (36) according to claim 4, wherein the intersection between the first space (E1) and the second space (E2) contains the center of the first loop (48) and the center of the second loop (50).

6. The ticketing reader (36) according to any one of the claims 1 to 5, wherein the first loop (48) and the second loop (50) are concentric.

7. The ticketing reader (36) according to any one of the claims 1 to 6, wherein the first loop (48) extends in a first plane, the second loop (50) extends in a second plane, the angle (α) between the two planes being less than or equal to 45°.

8. The ticketing reader (36) according to any one of the preceding claims, wherein each loop (48, 50) has a diameter, the ratio (R) between the diameter of the second loop (50) and the diameter of the first loop (48) being greater than or equal to 0.5.

9. The ticketing reader (36) according to any one of the claims 1 to 8, wherein each loop (48, 50) has a diameter, the ratio (R) between the diameter of the second loop (50) and the diameter of the first loop (48) being less than or equal to 1.

10. A ticketing equipment unit (20) comprising at least one ticketing reader (36) according to any one of claims 1 to 9, the ticketing equipment unit (20) being chosen from among the group consisting of a sales machine (28), an access control gate, a validator (30), a window reader and a mobile inspection terminal (32).

11. A ticketing installation (10), comprising:
- at least one ticketing equipment unit (20) according to claim 10;
- a central computer system (16), and
- at least one contactless medium (18).
